# EUROPÄISCHE PATENTANMELDUNG

(11) **EP 0 524 322 A1**
(43) Veröffentlichungstag der Anmeldung: **27.01.1993**
(21) Anmeldenummer: 91110175.6
(22) Anmeldetag: 20.06.1991
(51) Int. Cl.: G06F 15/16

(54) **Vorrichtung zum Datenaustausch zwischen Datenverarbeitungsanlagen**

(71) Anmelder: SIEMENS AKTIENGESELLSCHAFT, D-80333 München (DE)
(72) Erfinder: Griessbach, Gunter, Dipl.-Ing., O-9047 Chemnitz (DE)

(57) **Zusammenfassung**

Die Vorrichtung zum Datenaustausch zwischen Datenverarbeitungsanlagen (D1, D2) verfügt über zwei Speichereinrichtungen (S1, S2), von denen jeweils eine über Datenpuffer (P1 bis P4) wechselweise jeweils einer Datenverarbeitungsanlage (D1, D2) zugeordnet wird. Durch ein Steuersignal (E^{L}, E^{H}) ist ein Wechsel der Zuordnung auslösbar, so daß die jeweils andere Datenverarbeitungsanlage auf die von der vorher mit derselben Speichereinrichtung (S1, S2) verbundenen Datenverarbeitungsanlage (D1, D2) abgelegten Daten zugreifen und Daten für die andere Datenverarbeitungsanlage ablegen kann.

## Beschreibung

Zum Austausch von Daten zwischen Datenverarbeitungsanlagen jeglicher Art, die jeweils über eigene Speicherverwaltungseinrichtungen - das sind in der Regel Mikroprozessoren - verfügen, bedarf es verschiedener Voraussetzungen. Die beteiligten Datenverarbeitungsanlagen oder Mikroprozessor- bzw. Mikrocomputerkonfigurationen müssen "arbitrationsfähig" sein, d.h. sie müssen in der Lage sein, sich zum Zweck des Datenaustausches vom Datenbus abzuschalten und sie müssen beispielsweise durch Einfügen von Wartezuständen, das Beenden des Zykluses des anderen Prozessors abwarten können.

Nach einem herkömmlichen Verfahren zum Datenaustausch zwischen autonomen Mikroprozessoren schaltet sich jeweils ein Mikroprozessor vom gemeinsamen Datenbus ab und übergibt die Herrschaft über die Speicher an den Mikroprozessor der anfordernden Datenverarbeitungsanlage, damit diese ihre Daten in den Speicher ablegen bzw. von ihm abrufen kann. Bei einem anderen Verfahren wird ein Speicher mit zwei Eingängen (Dualport - RAM) verwendet, der jeweils einen Anschluß für eine Datenverarbeitungsanlage aufweist und der keine absolute Gleichzeitigkeit der Zugriffe auf die gleiche Zelle zuläßt.

Wie eingangs erwähnt, setzen diese herkömmlichen Verfahren eine besonders ausgebildete Speicherverwaltungseinheit voraus. Außerdem sind zusätzliche Einrichtungen, wie beispielsweise ein Bus-Arbiter oder ein Dualport-RAM notwendig. Bei nichtarbitrationsfähigen Mikrorechnern bzw. Mikrocomputern lassen sich diese Verfahren überhaupt nicht anwenden.

Aufgabe der Erfindung ist es, eine Vorrichtung zum Datenaustausch zwischen Datenverarbeitungsanlagen zu erhalten, bei der die genannten Nachteile vermieden werden und die auch bei nichtarbitrationsfähigen Datenverarbeitungsanlagen anwendbar ist.

Diese Aufgabe wird dadurch gelöst, daß mindestens eine Datenverarbeitungsanlage über eine erste Schnittstelle und mindestens eine Datenverarbeitungsanlage über eine zweite Schnittstelle an eine Vorrichtung zum Datenaustausch zwischen Datenverarbeitungsanlagen anschließbar ist, wobei die Vorrichtung zwei Speichereinrichtungen aufweist, denen jeweils zwei Datenpuffer zugeordnet sind, die über ein Steuersignal aktivierbar sind und wobei jeweils ein aktivierter und ein nichtaktivierter Datenpuffer mit mindestens einer Datenverarbeitungsanlage so verbunden ist, daß in Abhängigkeit vom Steuersignal jeweils eine Speichereinrichtung jeweils einer Schnittstelle zugeordnet ist und wobei das Steuersignal von einer Datenverarbeitungsanlage auslösbar ist.

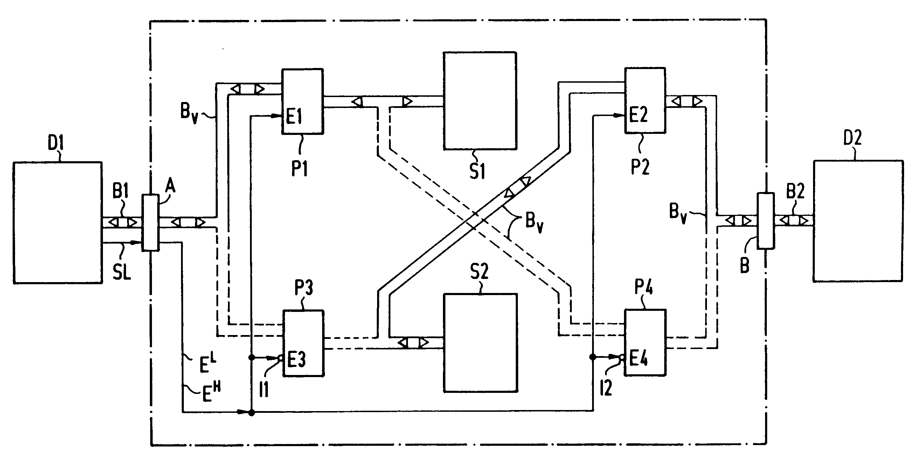

Ein Ausführungsbeispiel der Erfindung wird anhand der Zeichnung beschrieben.

Die Zeichung zeigt gestrichelt umrandet eine Vorrichtung zum Datenaustausch zwischen zwei Datenverarbeitungsanlagen D1, D2. Die Vorrichtung weist vier Datenpuffer P1, P2, P3, P4 sowie zwei Speichereinrichtungen S1, S2 auf. Sie ist über zwei Schnittstellen A, B mit dem jeweiligen Bussystem B1, B2 der Datenverarbeitungsanlagen D1 bzw. D2 verbunden.

Das Bussystem B_{V} der Vorrichtung verbindet die Schnittstelle A mit den Datenpuffern P1 und P3 sowie die Schnittstelle B mit den Datenpuffern P2 und P4. Über die Datenpuffer P1 bis P4 ist das Bussystem B_{V} der Vorrichtung mit den Speichervorrichtungen S1 und S2 verbunden, wobei im Ausführungsbeispiel die Datenpuffer P1 und P4 mit der Speichervorrichtung S1 und die Datenpuffer P2 und P3 mit der Speichervorrichtung S2 verbunden sind.

Über eine gesondert ausgeführte Steuerleitung SL, die jedoch auch Bestandteil des Bussystems B1 sein könnte, kann die Datenverarbeitungseinrichtung D1 der Vorrichtung ein binäres Steuersignal E^{H} zuführen. Die Steuerleitung SL wird ebenfalls über die Schnittstelle A - dies ist jedoch nicht obligatorisch - an die Vorrichtung angeschlossen und verbindet die Steuereingänge E1 bis E4 der Datenpuffer P1 bis P4, wobei das Steuersignal den Datenpuffern P3 und P4 über jeweils einen Inverter I1 und I2 zugeführt wird.

In der dargestellten Konfiguration liegt an der Steuerleitung SL das Steuersignal E^{H} an, das dem Wert "logisch 1" oder "high" entspricht. Damit werden die Datenpuffer P1 und P2 durchgeschaltet, so daß die Speichervorrichtung S1 über die Schnittstelle A mit der Datenverarbeitungsanlage D1 und die Speichervorrichtung S2 über die Schnittstelle B mit der Datenverarbeitungsanlage D2 verbunden sind. An den Datenpuffern P3 und P4 wird das Steuersignal invertiert, so daß an diesen der Wert "logisch 0" oder "low" anliegt und diese somit die Busverbindung zwischen den Schnittstellen A und B und den Speichervorrichtungen S2 und S1 unterbrechen. Dieser Sachverhalt ist durch die gestrichelten Teile des Bussystems B_{V} der Vorrichtung symbolisiert.

Die Datenverarbeitungsanlage D1 kann also die Speichervorrichtung S1 beschreiben oder aus ihr Daten einlesen. Gleichzeitig kann die Datenverarbeitungseinrichtung D2 die Speichereinrichtung S2 in gleicher Weise bedienen. Wenn der Datenaustauschzyklus beendet ist, kann die Datenverarbeitungseinrichtung D1 über die Steuerleitung SL das Signal E^{L}, also das Signal "logisch 0" bzw. "low" anlegen, so daß nun die Datenpuffer P3 und P4 durchschalten und die Datenpuffer P1 und P2 sperren. Damit wird der Datenverarbeitungsanlage D1 die Speichereinrichtung S2 zugeordnet und der Datenverarbeitungsanlage D2 die Speichereinrichtung S1. Somit kann die Datenverarbeitungsanlage D1 aus der Speichervorrichtung S2 die Daten abfragen, die die Datenverarbeitungsanlage D2 zuvor in die Speichervorrichtung S2 für die Datenverarbeitungsanlage D1 eingeschrieben hat. Umgekehrt gilt dasselbe für die Datenverarbeitungsanlage D2 in Bezug auf die Speichereinrichtung S1, für die dort zuvor von der Datenverarbeitungseinrichtung D1 abgelegten Daten.

Durch wechselweise Umschalten des Steuersignals E^{H}, E^{L} kann somit jede Datenverarbeitungsanlage D1, D2 für die andere Datenverarbeitungsanlage D2, D1 Daten hinterlegen, ohne daß diese gegenseitige Rücksichten aufeinander nehmen müssen. Da eine der Datenverarbeitungsanlagen D1, D2 - im Ausführungsbeispiel die Datenverarbeitungsanlage D1 - die Steuerleitung SL bedient, muß diese Datenverarbeitungseinrichtung D1 noch sicherstellen, daß die Datenverarbeitungseinrichtung D2 ihren Speicherzugriffszyklus abgeschlossen hat, bevor die Datenverarbeitungseinrichtung D1 das Steuersignal E^{H}, E^{L} wechselt. Dies könnte beispielsweise durch eine zusätzliche, im Ausführungsbeispiel der Übersichtlichkeit halber nicht gezeigte Steuerleitung, die beide Datenverarbeitungsanlagen D1, D2 verbindet, sichergestellt werden.

## Patentansprüche

1. Vorrichtung zum Datenaustausch zwischen Datenverarbeitungsanlagen (D1, D2), wobei mindestens eine Datenverarbeitungsanlage (D1) über eine erste Schnittstelle (A) und mindestens eine Datenverarbeitungsanlage (D2) über eine zweite Schnittstelle (B) an die Vorrichtung anschließbar ist, wobei die Vorrichtung zwei Speichereinrichtungen (S1, S2) aufweist, denen jeweils zwei Datenpuffer (P1, P4; P3, P2) zugeordnet sind, die über ein Steuersignal (E^{H}, E^{L}) aktivierbar sind, wobei jeweils ein aktivierter und ein nichtaktivierter Datenpuffer (P1, P3; P2, P4) mit mindestens einer Datenverarbeitungsanlage (D1, D2) so verbunden ist, daß in Abhängigkeit vom Steuersignal (E^{L}, E^{H}) jeweils eine Speichereinrichtung (S1, S2) jeweils einer Schnittstelle (A, B) zugeordnet ist und wobei das Steuersignal (E^{H}, E^{L}) von einer Datenverarbeitungsanlage (D1, D2) auslösbar ist.
